# EUROPÄISCHE PATENTSCHRIFT

(11) **EP 2 944 448 B1**
(45) Veröffentlichungstag und Bekanntmachung des Hinweises auf die Patenterteilung: **25.09.2019**
(21) Anmeldenummer: 14168171.8
(22) Anmeldetag: 13.05.2014
(51) Int. Cl.: B29C 48/25, B29C 48/40, B29B 7/58, B29B 7/46

(54) **Getriebe-Anordnung für einen Doppelschneckenextruder und Verfahren zur Inbetriebnahme einer Aufbereitungsanlage**
Gearbox assembly for a twin screw extruder and method for commissioning a plant
Système d'engrenage pour une extrudeuse à deux vis et procédé de mise en service d'une installation de préparation

(43) Veröffentlichungstag der Anmeldung: 18.11.2015
(73) Patentinhaber: Coperion GmbH, 70469 Stuttgart (DE)
(72) Erfinder: Wengert, Bernhard, 71549 Auenwald (DE); Schleicher, Raimund, 71672 Marbach (DE); Riehle, Ralf, 72144 Dusslingen (DE)
(74) Vertreter: Rau, Schneck & Hübner Patentanwälte Rechtsanwälte PartGmbB

(56) Entgegenhaltungen:
- EP-A1- 1 854 531
- EP-A1- 2 397 304
- DE-A1- 10 101 255
- DE-A1- 19 736 549
- US-A1- 2007 191 169

## Beschreibung

Die Erfindung betrifft eine Getriebe-Anordnung für einen Doppelschneckenextruder. Die Erfindung betrifft ferner eine Aufbereitungsanlage zur Materialaufbereitung mit einer derartigen Getriebe-Anordnung. Die Erfindung betrifft weiterhin ein Verfahren zur Inbetriebnahme einer Aufbereitungsanlage mit einer derartigen Getriebe-Anordnung.

Aus der DE 101 01 255 A1 (entspr. US 2001/008 372 A1) ist eine Antriebsvorrichtung für einen Doppelschneckenextruder bekannt. Die Antriebsvorrichtung umfasst eine Getriebe-Anordnung, die antriebsseitig von einem Hauptmotor und einem Hilfsmotor angetrieben wird und abtriebsseitig mit den Schneckenwellen des Doppelschneckenextruders verbunden ist. Die Getriebe-Anordnung umfasst ein als Planetengetriebe ausgebildetes Überlagerungsgetriebe, ein Verteilergetriebe und ein dazwischen angeordnetes Drehzahl- bzw. Geschwindigkeitswechselgetriebe. Das Geschwindigkeitswechselgetriebe dient zur Anpassung der Umdrehungsgeschwindigkeit bzw. Drehzahl der Schneckenwellen. Zum Geschwindigkeitswechsel wird ein Zahnradpaar des Geschwindigkeitswechselgetriebes gegen ein anderes Zahnradpaar mit unterschiedlichem Übersetzungsverhältnis getauscht.

Aus der EP 2 397 304 A1 ist eine Antriebsvorrichtung für einen Doppelschneckenextruder bekannt. Die Antriebsvorrichtung weist ein Differenzial-Überlagerungsgetriebe mit einer Übersetzung von 1 auf, das die Antriebsleistungen eines Haupt-Antriebsmotors und eines Zusatz-Antriebsmotors überlagert.

Aus der US 2007/0191169 A1 ist eine Antriebsvorrichtung für einen Doppelschneckenextruder bekannt. Die Antriebsvorrichtung weist ein Planetengetriebe auf, das die Antriebsdrehzahlen eines Haupt-Antriebsmotors und eines Hilfs-Antriebsmotors überlagert. Das Planetengetriebe hat ein Übersetzungsverhältnis von 1. Zwischen dem Haupt-Antriebsmotor und dem Planetengetriebe ist ein Reduziergetriebe angeordnet, dessen Übersetzungsverhältnis durch Auswahl von verschiedenen Zahnradpaaren wechselbar ist. Mittels des Reduziergetriebes wird die Drehzahl des Haupt-Antriebsmotors reduziert. Das Reduziergetriebe und das Planetengetriebe sind als Getriebe-Einheit ausgebildet. Zwischen dem Hilfs-Antriebsmotor und dem Planetengetriebe ist ein separates Drehzahlwechselgetriebe angeordnet.

Aus der DE 197 36 549 A1 ist eine Antriebsvorrichtung für einen Doppelschneckenextruder bekannt. Die Antriebsvorrichtung umfasst ein Planetengetriebe zur Überlagerung der Drehzahlen eines Hauptmotors und eines Zusatzmotors.

Aus der EP 1 854 531 A1 ist eine Antriebsvorrichtung für einen Mischer mit Mischrotoren bekannt. Die Antriebsvorrichtung umfasst ein Planetengetriebe zur Überlagerung der Drehzahlen von zwei Antriebsmotoren.

Der Erfindung liegt die Aufgabe zugrunde, eine Getriebe-Anordnung zu schaffen, die bei dem Betrieb eines Doppelschneckenextruders eine hohe Flexibilität und eine hohe Produktivität ermöglicht.

Diese Aufgabe wird durch eine Getriebe-Anordnung mit den Merkmalen des Anspruchs 1 gelöst. Dadurch, dass das Drehzahlwechselgetriebe an der Antriebsseite der Getriebe-Anordnung angeordnet ist und von dem Drehzahlreduktionsgetriebe trennbar ausgebildet ist, kann das Übersetzungsverhältnis der Getriebe-Anordnung in einfacher Weise durch einen Austausch des Drehzahlwechselgetriebes geändert werden. Erfindungsgemäß wurde erkannt, dass eine Anpassung des Übersetzungsverhältnisses einfacher und schneller möglich ist, wenn das gesamte Drehzahlwechselgetriebe ausgetauscht wird und nicht - wie im Stand der Technik bekannt - die Zahnräder des Drehzahlwechselgetriebes gewechselt werden. Das Drehzahlwechselgetriebe ist hierzu als eigenständiges Getriebemodul bzw. als eigenständige Getriebeeinheit ausgebildet, die baulich von dem Drehzahlreduktionsgetriebe getrennt ist. Das Drehzahlwechselgetriebe weist ein Übersetzungsverhältnis iw auf, für das betragsmäßig gilt: iw ≠ 1. Das bedeutet, dass das Übersetzungsverhältnis des Drehzahlwechselgetriebes je nach Bedarf größer oder kleiner als 1 sein kann. Das Drehzahlwechselgetriebe ist insbesondere einstufig ausgebildet. Das Drehzahlreduktionsgetriebe koppelt das Drehzahlwechselgetriebe mit dem Verteilergetriebe. Das Drehzahlreduktionsgetriebe weist ein Übersetzungsverhältnis i_{R} auf, für das betragsmäßig gilt: i_{R} > 1. Das Drehzahlreduktionsgetriebe ist insbesondere einstufig ausgebildet. Dadurch, dass das Drehzahlwechselgetriebe als eigenständiges Getriebemodul ausgebildet ist, ist ein einfacher und schneller Austausch des Drehzahlwechselgetriebes durch ein anderes Drehzahlwechselgetriebe möglich. Hierdurch ist ein schneller Übersetzungswechsel möglich, wodurch einerseits eine hohe Flexibilität beim Betrieb des Doppelschneckenextruders und infolge kurzer Stillstandszeiten auch eine hohe Produktivität gewährleistet ist. Zudem kann das Drehzahlwechselgetriebe im Falle einer anstehenden Wartung und/oder eines Defekts gleichermaßen einfach und schnell gegen ein anderes Drehzahlwechselgetriebe getauscht werden. Auch hierdurch werden Stillstandszeiten reduziert, wodurch eine hohe Produktivität gewährleistet ist. Die Getriebe-Anordnung dient vorzugsweise zum gleichsinnigen Drehantreiben eines Doppelschneckenextruders.

Die Getriebe-Anordnung gewährleistet einen einfachen und schnellen Austausch des Drehzahlwechselgetriebes und hierdurch eine hohe Flexibilität und Produktivität bei dem Betrieb eines Doppelschneckenextruders. Das Drehzahlreduktionsgetriebe weist genau eine Drehzahlreduktionsgetriebe-Eingangswelle auf. Die Drehzahlwechselgetriebe-Ausgangswelle und die Drehzahlreduktionsgetriebe-Eingangswelle bilden eine lösbare Wellenverbindung aus, die bei einem Austausch des Drehzahlwechselgetriebes einfach gelöst werden kann, so dass die Drehzahlwechselgetriebe-Ausgangswelle einfach und schnell von der Drehzahlreduktionsgetriebe-Eingangswelle getrennt ist. Durch die getrennte Ausbildung des Drehzahlwechselgetriebe-Gehäuses von dem Drehzahlreduktionsgetriebe-Gehäuse ist ein vollständiger Austausch des Drehzahlwechselgetriebes einschließlich des zugehörigen Gehäuses möglich, wodurch der Austausch vereinfacht wird. Das Drehzahlwechselgetriebe-Gehäuse kann beispielsweise geeignete Befestigungselemente für eine Hubvorrichtung aufweisen, so dass das Drehzahlwechselgetriebe mittels der Hubvorrichtung einfach und schnell ausgetauscht werden kann. Im Betrieb sind das Drehzahlwechselgetriebe-Gehäuse und das Drehzahlreduktions-Gehäuse mit lösbaren Befestigungsmitteln miteinander verbunden. Die Befestigungsmittel sind einfach zugänglich angeordnet, so dass diese bei Bedarf einfach und schnell gelöst werden können.

Eine Getriebe-Anordnung nach Anspruch 2 gewährleistet einen einfachen und schnellen Austausch des Drehzahlwechselgetriebes und hierdurch eine hohe Flexibilität und Produktivität bei dem Betrieb eines Doppelschneckenextruders. Dadurch, dass die Drehzahlwechselgetriebe-Eingangswelle lösbar mit einer Antriebswelle des Antriebsmotors gekoppelt ist, also eine lösbare Wellenverbindung ausbilden, kann das Drehzahlwechselgetriebe bei einem vorgesehenen Austausch schnell von dem Antriebsmotor getrennt werden. Die lösbare Wellenverbindung wird insbesondere durch eine Kupplung zwischen dem Antriebsmotor und dem Drehzahlwechselgetriebe ausgebildet. Hierzu weist die Kupplung ein antriebsseitiges Kupplungsteil, das an der Antriebswelle befestigt ist, und ein getriebeseitiges Kupplungsteil, das an der Drehzahlwechselgetriebe-Eingangswelle befestigt ist, auf, wobei die Kupplungsteile über ein Reibteil in Drehmoment übertragender Weise miteinander verbunden sind. Das Reibteil ist lösbar an einem der Kupplungsteile befestigt, so dass die Wellenverbindung durch Demontage des Reibteils lösbar ist. Vorzugsweise weist das Drehzahlwechselgetriebe genau eine Drehzahlwechselgetriebe-Eingangswelle auf.

Eine Getriebe-Anordnung nach Anspruch 3 gewährleistet einen einfachen und schnellen Austausch des Drehzahlwechselgetriebes und hierdurch eine hohe Flexibilität und Produktivität bei dem Betrieb eines Doppelschneckenextruders. Dadurch, dass die Drehzahlwechselgetriebe-Ausgangswelle beidseitig des Zahnrads durch Radiallager gelagert ist, ist die Lagerung der Drehzahlwechselgetriebe-Ausgangswelle unabhängig von einer Lagerung der mit dieser verbundenen Drehzahlreduktionsgetriebe-Eingangswelle. Hierdurch ist die Drehzahlwechselgetriebe-Ausgangswelle sowohl im Betrieb als auch bei einem Austausch des Drehzahlwechselgetriebes sicher und zuverlässig gelagert. Vorzugsweise ist eine Drehzahlwechselgetriebe-Eingangswelle beidseitig eines eingangsseitigen Zahnrads, das an der Drehzahlwechselgetriebe-Eingangswelle angeordnet ist, durch Radiallager gelagert. Hierdurch ist auch die Drehzahlwechselgetriebe-Eingangswelle im Betrieb und bei einem Austausch sicher und zuverlässig gelagert. Die Lagerung erfolgt insbesondere an einem Drehzahlwechselgetriebe-Gehäuse, das separat, als getrennt von einem Drehzahlreduktionsgetriebe-Gehäuse ausgebildet ist.

Eine Getriebe-Anordnung nach Anspruch 4 gewährleistet einen einfachen und schnellen Austausch des Drehzahlwechselgetriebes und hierdurch eine hohe Flexibilität und Produktivität bei dem Betrieb eines Doppelschneckenextruders. Das Drehzahlreduktionsgetriebe weist genau eine Drehzahlreduktionsgetriebe-Eingangswelle auf. Dadurch, dass die Drehzahlreduktionsgetriebe-Eingangswelle beidseitig eines eingangsseitigen Zahnrads durch Radiallager gelagert ist, ist die Lagerung der Drehzahlreduktionsgetriebe-Eingangswelle unabhängig von der Lagerung der mit dieser verbundenen Drehzahlwechselgetriebe-Ausgangswelle.

Eine Getriebe-Anordnung nach Anspruch 5 gewährleistet auf einfache und schnelle Weise eine Ausrichtung des Drehzahlwechselgetriebes zu einem Antriebsmotor, wodurch ein einfaches und schnelles Ankoppeln des Antriebsmotors an die Getriebe-Anordnung möglich ist. Durch den Verbindungsabschnitt des Drehzahlwechselgetriebe-Gehäuses ist die Drehzahlwechselgetriebe-Eingangswelle in unterschiedlichen Winkelpositionen relativ zu der in ihrer Lage fest vorgegebenen Drehzahlwechselgetriebe-Ausgangswelle positionierbar. Durch die unterschiedlichen Winkelpositionen ist die Drehzahlwechselgetriebe-Eingangswelle insbesondere in ihrer vertikalen Position veränderbar und an die vertikale Position der Antriebswelle eines Antriebsmotors anpassbar. Die Winkelpositionen können diskrete Winkelpositionen und/oder ein zumindest teilweise kontinuierlicher Winkelbereich sein.

Eine Getriebe-Anordnung nach Anspruch 6 gewährleistet einen einfachen und schnellen Austausch des Drehzahlwechselgetriebes und hierdurch eine hohe Flexibilität und Produktivität bei dem Betrieb eines Doppelschneckenextruders. Durch die Soll-Trennstelle kann die mindestens eine Schmiermittelleitung bei einem Austausch des Drehzahlwechselgetriebes einfach und schnell getrennt werden. Vorzugsweise liegt die Soll-Trennstelle außerhalb des Drehzahlwechselgetriebe-Gehäuses und des Drehzahlreduktionsgetriebe-Gehäuses und kann vor der Trennung der Gehäuse getrennt werden. Hierzu ist die mindestens eine Schmiermittelleitung zwischen dem Drehzahlwechselgetriebe und dem Drehzahlreduktionsgetriebe beispielsweise als Schlauch ausgebildet, der als Soll-Trennstelle eine Schnellkupplung aufweist. Innerhalb des Drehzahlwechselgetriebe-Gehäuses und/oder des Drehzahlreduktionsgetriebe-Gehäuses ist die mindestens eine Schmiermittelleitung insbesondere durch mindestens ein fest angeordnetes Rohr und/oder eine fest angeordnete Bohrung ausgebildet. Die Schnellkupplung ist im getrennten Zustand vorzugsweise selbst abdichtend und im montierten Zustand verriegelnd.

Eine Getriebe-Anordnung nach Anspruch 7 gewährleistet eine einfache und schnelle Wiederinbetriebnahme nach einem Austausch des Drehzahlwechselgetriebes. Das Kodierelement enthält als Information das Übersetzungsverhältnis des Drehzahlwechselgetriebes. Mittels einer Leseeinrichtung kann die Information des Kodierelements ausgelesen werden und insbesondere automatisch einer Steuereinrichtung zugeführt werden, die Teil einer Aufbereitungsanlage zur Materialaufbereitung ist. Die Aufbereitungsanlage umfasst die erfindungsgemäße Getriebe-Anordnung, einen Antriebsmotor und einen Doppelschneckenextruder sowie die Steuereinrichtung und die Leseeinrichtung. Durch die Steuereinrichtung kann das Übersetzungsverhältnis der Getriebe-Anordnung in Abhängigkeit des ausgelesenen Übersetzungsverhältnisses des Drehzahlwechselgetriebes ermittelt und der Antriebsmotor und/oder der Doppelschneckenextruder entsprechend angesteuert werden. Das Kodierelement kann beispielsweise ein mechanisches oder optisches Auslesen der Information ermöglichen.

Eine Getriebe-Anordnung nach Anspruch 8 gewährleistet einen einfachen und schnellen Austausch des Drehzahlreduktionsgetriebes im Falle einer anstehenden Wartung oder eines Schadens. Das Drehzahlreduktionsgetriebe ist von dem Verteilergetriebe trennbar ausgebildet. Das Drehzahlreduktionsgetriebe ist dementsprechend als eigenständiges Getriebemodul bzw. als eigenständige Getriebeeinheit ausgebildet. Das Drehzahlreduktionsgetriebe kann dementsprechend einfach und schnell von dem Drehzahlwechselgetriebe und dem Verteilergetriebe getrennt und durch ein anderes Drehzahlreduktionsgetriebe ausgetauscht werden. Hierzu ist die Drehzahlreduktions-Ausgangswelle lösbar mit der Verteilergetriebe-Eingangswelle verbunden. Die Drehzahlreduktionsgetriebe-Ausgangswelle und die Verteilergetriebe-Eingangswelle bilden also eine lösbare Wellenverbindung aus. Im Falle einer anstehenden Wartung wird das zu wartende Drehzahlreduktionsgetriebe einfach durch ein neues bzw. gewartetes Drehzahlreduktionsgetriebe getauscht, wodurch die Stillstandszeit des Doppelschneckenextruders erheblich reduziert und die Produktivität und Verfügbarkeit somit erhöht wird.

Eine Getriebe-Anordnung nach Anspruch 9 gewährleistet einen einfachen und schnellen Austausch des Drehzahlreduktionsgetriebes und hierdurch eine hohe Produktivität bei dem Betrieb eines Doppelschneckenextruders. Dadurch, dass die Drehzahlreduktionsgetriebe-Ausgangswelle beidseitig des ausgangsseitigen Zahnrades durch Radiallager gelagert ist, ist die Lagerung der Drehzahlreduktionsgetriebe-Ausgangswelle unabhängig von der Lagerung einer mit dieser verbundenen Verteilergetriebe-Eingangswelle. Die Drehzahlreduktions-Ausgangswelle ist somit bei einem Austausch des Drehzahlreduktionsgetriebes sicher und zuverlässig gelagert.

Eine Getriebe-Anordnung nach Anspruch 10 gewährleistet einen einfachen und schnellen Austausch des Drehzahlreduktionsgetriebes und hierdurch eine hohe Produktivität bei dem Betrieb eines Doppelschneckenextruders. Dadurch, dass die Verteilergetriebe-Eingangswelle beidseitig eines eingangsseitigen Zahnrades durch Radiallager gelagert ist, ist die Lagerung der Verteilergetriebe-Eingangswelle unabhängig von der Lagerung einer mit dieser verbundenen Drehzahlreduktionsgetriebe-Ausgangswelle. Die Verteilergetriebe-Eingangswelle ist bei einem Austausch des Drehzahlreduktionsgetriebes somit sicher und zuverlässig gelagert.

Eine Getriebe-Anordnung nach Anspruch 11 gewährleistet einen einfachen und schnellen Austausch des Drehzahlreduktionsgetriebes. Dadurch, dass das Drehzahlreduktionsgetriebe-Gehäuse getrennt von dem Verteilergetriebe-Gehäuse ausgebildet ist, kann das gesamte Drehzahlreduktionsgetriebe einschließlich des Gehäuses ausgetauscht werden. Das Drehzahlreduktionsgetriebe-Gehäuse weist insbesondere geeignete Befestigungsmittel für eine Hebevorrichtung auf, so dass das Drehzahlreduktionsgetriebe mittels der Hebevorrichtung einfach und schnell ausgetauscht werden kann. Vorzugsweise sind das Drehzahlreduktionsgetriebe-Gehäuse und das Verteilergetriebe-Gehäuse lösbar miteinander verbunden. Hierzu sind beispielsweise lösbare Befestigungsmittel vorgesehen, die einfach zugänglich an mindestens einem der Gehäuse angeordnet sind.

Der Erfindung liegt ferner die Aufgabe zugrunde, eine Aufbereitungsanlage zur Materialaufbereitung zu schaffen, die eine hohe Flexibilität und Produktivität bei dem Betrieb eines Doppelschneckenextruders ermöglicht.

Diese Aufgabe wird durch eine Aufbereitungsanlage mit den Merkmalen des Anspruchs 12 gelöst. Die Vorteile der erfindungsgemäßen Aufbereitungsanlage entsprechen den bereits beschriebenen Vorteilen der erfindungsgemäßen Getriebe-Anordnung. Die Aufbereitungsanlage kann insbesondere auch mit den Merkmalen der Getriebe-Anordnung weitergebildet werden. Die Aufbereitungsanlage weist vorzugsweise eine Leseeinrichtung auf, mittels der ein Kodierelement des Drehzahlwechselgetriebes auslesbar ist, sowie eine zugehörige Steuereinrichtung mittels der der Antriebsmotor und/oder der Doppelschneckenextruder in Abhängigkeit der ausgelesenen Information des Kodierelements steuerbar sind. Das Kodierelement enthält insbesondere als Information das Übersetzungsverhältnis des Drehzahlwechselgetriebes.

Der Erfindung liegt ferner die Aufgabe zugrunde, ein Verfahren zur Inbetriebnahme einer Aufbereitungsanlage zur Materialaufbereitung zu schaffen, das eine hohe Flexibilität und Produktivität bei dem Betrieb eines Doppelschneckenextruders ermöglicht.

Diese Aufgabe wird durch ein Verfahren mit den Merkmalen des Anspruchs 13 gelöst. Die Vorteile des erfindungsgemäßen Verfahrens entsprechen den bereits beschriebenen Vorteilen der erfindungsgemäßen Getriebe-Anordnung und der Aufbereitungsanlage. Das Verfahren kann insbesondere mit den Merkmalen mindestens eines der Ansprüche 1 bis 12 weitergebildet werden. Das erste Drehzahlwechselgetriebe kann einfach und schnell durch ein zweites Drehzahlwechselgetriebe ersetzt werden. Hierzu wird das erste Drehzahlwechselgetriebe von dem Antriebsmotor und dem Drehzahlreduktionsgetriebe getrennt und anschließend ausgetauscht. Dies ist möglich, da das Drehzahlwechselgetriebe von dem Drehzahlreduktionsgetriebe baulich getrennt ausgebildet ist. Das Drehzahlwechselgetriebe bildet somit ein eigenständiges Getriebemodul bzw. eine eigenständige Getriebeeinheit. Das zweite Drehzahlwechselgetriebe kann entsprechend einfach und schnell mit dem Antriebsmotor und dem Drehzahlreduktionsgetriebe gekoppelt werden, so dass anschließend ein Anfahren des Doppelschneckenextruders mittels des Antriebsmotors möglich ist. Durch die Ausbildung der Getriebe-Anordnung ist im Falle eines gewünschten Wechsels des Übersetzungsverhältnisses und/oder einer vorgesehenen Wartung und/oder eines Schadens eine schnelle Inbetriebnahme bzw. Wiederinbetriebnahme der Aufbereitungsanlage möglich, so dass die Aufbereitungsanlage geringe Stillstandszeiten aufweist. Durch das erfindungsgemäße Verfahren kann ein Doppelschneckenextruder somit mit einer hohen Flexibilität und Produktivität betrieben werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine Prinzipdarstellung einer Aufbereitungsanlage zur Materialaufbereitung mit einem Antriebsmotor, einem Doppelschneckenextruder und einer zugehörigen Getriebe-Anordnung gemäß einem ersten Ausführungsbeispiel,
- Fig. 2: eine Frontansicht der Getriebe-Anordnung in Fig. 1,
- Fig. 3: eine schematische Darstellung einer lösbaren Wellenverbindung eines Drehzahlwechselgetriebes und eines Drehzahlreduktionsgetriebes der Getriebe-Anordnung in Fig. 1,
- Fig. 4: eine Prinzipdarstellung einer Aufbereitungsanlage zur Materialaufbereitung mit einem Antriebsmotor, einem Doppelschneckenextruder und einer zugehörigen Getriebe-Anordnung gemäß einem zweiten Ausführungsbeispiel, und
- Fig. 5: eine Prinzipdarstellung einer Aufbereitungsanlage zur Materialaufbereitung mit einem Antriebsmotor, einem Doppelschneckenextruder und einer zugehörigen Getriebe-Anordnung gemäß einem dritten Ausführungsbeispiel.

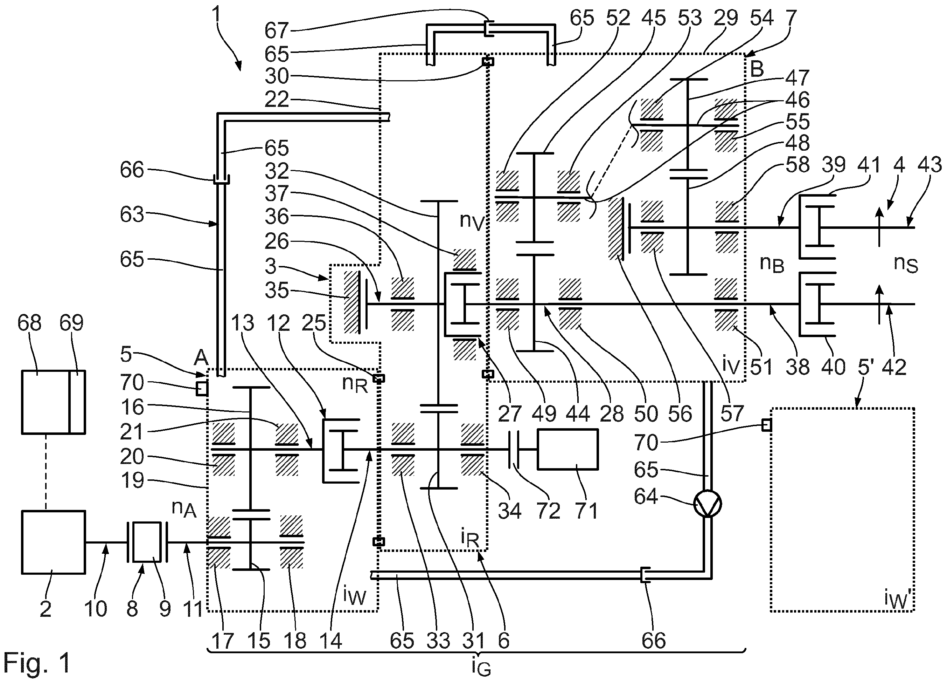

Nachfolgend ist anhand der Fig. 1 bis 3 ein erstes Ausführungsbeispiel der Erfindung beschrieben. Eine Aufbereitungsanlage 1 umfasst einen Antriebsmotor 2, der über eine Getriebe-Anordnung 3 einen Doppelschneckenextruder 4 gleichsinnig drehantreibt. Der Antriebsmotor 2 ist mit der Getriebe-Anordnung 3 über eine Kupplung 8 gekoppelt. Die Aufbereitungsanlage 1 dient zur Materialaufbereitung, insbesondere zur Aufbereitung von Kunststoffmaterial.

Die Getriebe-Anordnung 3 weist an einer Antriebsseite A ein Drehzahlwechselgetriebe 5 und an einer Abtriebsseite B ein Verteilergetriebe 7 auf, die mittels eines Drehzahlreduktionsgetriebes 6 miteinander mechanisch verbunden bzw. gekoppelt sind. Die Getriebe-Anordnung 3 weist ein Übersetzungsverhältnis i_{G} auf, das sich aus einer antriebsseitigen Antriebsmotor-Drehzahl n_{A} und einer abtriebsseitigen Getriebe-Drehzahl n_{B} ergibt, wobei für i_{G} gilt: i_{G} = n_{A}/n_{B} > 1.

Das Drehzahlwechselgetriebe 5 ist baulich getrennt ausgebildet. Hierzu ist das Drehzahlwechselgetriebe 5 von dem Drehzahlreduktionsgetriebe 6 getrennt ausgebildet und bildet somit ein eigenständiges Getriebemodul bzw. eine eigenständige Getriebeeinheit. Antriebsseitig des Drehzahlwechselgetriebes 5 ist eine Antriebswelle 10 des Antriebsmotors 2 über die Kupplung 8 lösbar mit einer Drehzahlwechselgetriebe-Eingangswelle 11 verbunden. Hierzu ist zwischen einem antriebsseitigen Kupplungsteil, das an der Antriebswelle 10 befestigt ist, und einem getriebeseitigen Kupplungsteil, das an der Drehzahlwechselgetriebe-Eingangswelle 11 befestigt ist, ein Reibteil 9 angeordnet, das lösbar mit einem der Kupplungsteile, insbesondere dem getriebeseitigen Kupplungsteil verbunden ist. Durch Demontage des Reibteils 9 kann die Wellenverbindung zwischen der Antriebswelle 10 und der Drehzahlwechselgetriebe-Eingangswelle 11 gelöst werden. Abtriebsseitig des Drehzahlwechselgetriebes 5 ist eine lösbare Wellenverbindung 12 ausgebildet, die eine Drehzahlwechselgetriebe-Ausgangswelle 13 des Drehzahlwechselgetriebes 5 mit einer Drehzahlreduktionsgetriebe-Eingangswelle 14 des Drehzahlreduktionsgetriebes 5 verbindet.

Das Drehzahlwechselgetriebe 5 ist einstufig ausgebildet und weist ein Übersetzungsverhältnis i_{W} auf, das durch die antriebsseitige Drehzahl n_{A} und eine abtriebsseitige Drehzahl n_{R} definiert ist. Für das Übersetzungsverhältnis i_{W} gilt: i_{W} = n_{A}/n_{R} ≠ 1. Je nach Bedarf ist das Übersetzungsverhältnis i_{W} somit größer oder kleiner als 1. Das Übersetzungsverhältnis i_{W} wird durch ein erstes Drehzahlwechselgetriebe-Zahnrad 15, das an der Eingangswelle 11 angeordnet ist, und ein zweites Drehzahlwechselgetriebe-Zahnrad 16, das an der Ausgangswelle 13 angeordnet ist, definiert. Die Zahnräder 15, 16 sind in Eingriff miteinander und insbesondere als Stirnräder ausgebildet. Die Drehzahlwechselgetriebe-Eingangswelle 11 ist beidseitig des ersten Zahnrades 15 mittels Radiallagern 17, 18 an einem Drehzahlwechselgetriebe-Gehäuse 19 des Drehzahlwechselgetriebes 5 gelagert. Entsprechend ist die Drehzahlwechselgetriebe-Ausgangswelle 13 beidseitig des zweiten Zahnrades 16 mittels Radiallagern 20, 21 an dem Drehzahlwechselgetriebe-Gehäuse 19 gelagert. Die Radiallager 17, 18, 20 und/oder 21 dienen insbesondere zur Aufnahme von Radialkräften, jedoch können die Radiallager auch zur Aufnahme von Axialkräften ausgebildet sein.

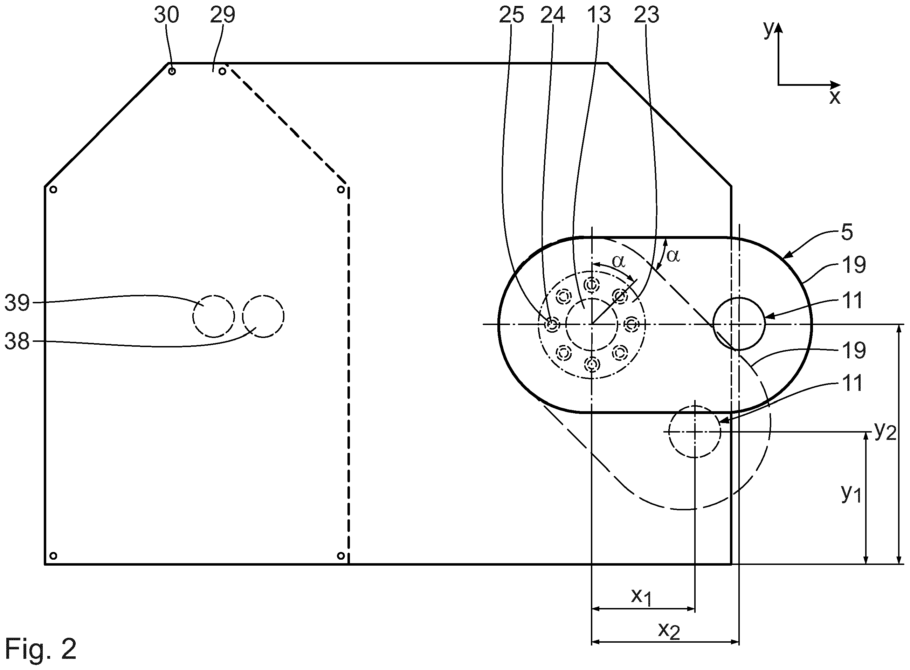

Das Drehzahlwechselgetriebe-Gehäuse 19 ist getrennt von einem Drehzahlreduktionsgetriebe-Gehäuse 22 des Drehzahlreduktionsgetriebes 6 ausgebildet. Das Drehzahlwechselgetriebe-Gehäuse 19 ist lösbar mit dem Drehzahlreduktionsgetriebe-Gehäuse 22 verbunden. Hierzu weist das Drehzahlwechselgetriebe-Gehäuse 19 einen Verbindungsabschnitt 23 auf. Der Verbindungsabschnitt 23 ist als ringförmiger Flansch ausgebildet, der im Wesentlichen konzentrisch zu der Ausgangswelle 13 angeordnet ist. Der Verbindungsabschnitt 23 weist mehrere Befestigungsbohrungen 24 auf, die um die Ausgangswelle 13 angeordnet sind. Durch die Befestigungsbohrungen 24 sind Befestigungsmittel 25, beispielsweise Schrauben geführt, die in dem Drehzahlreduktionsgetriebe-Gehäuse 22 lösbar befestigt sind. Das Drehzahlwechselgetriebe-Gehäuse 19 kann somit - je nach Anzahl und Form der Befestigungsbohrungen 24 - in unterschiedlichen Winkelpositionen α an dem Drehzahlreduktionsgetriebe-Gehäuse 22 befestigt werden. Die Befestigungsbohrungen 24 können beispielsweise die Form eines Kreises oder eines Langlochs aufweisen. In Abhängigkeit der Winkelposition α ist die Position der Eingangswelle 11 veränderbar bzw. einstellbar. Insbesondere ist die Position der Eingangswelle 11 in einer Horizontalen x- und/oder einer vertikalen y-Richtung einstellbar. In Fig. 2 ist beispielsweise eine erste Position x₁, y₁ und eine zweite Position x₂, y₂ der Eingangswelle 11 in Abhängigkeit der Winkelposition α dargestellt.

Das Drehzahlreduktionsgetriebe 6 ist getrennt von dem Drehzahlwechselgetriebe 5 und dem Verteilergetriebe 7 ausgebildet. Das Drehzahlreduktionsgetriebe 6 bildet somit ein eigenständiges Getriebemodul bzw. eine eigenständige Getriebeeinheit. Wie bereits beschrieben wurde, ist die Drehzahlreduktionsgetriebe-Eingangswelle 14 mittels der lösbaren Wellenverbindung 12 mit der Drehzahlwechselgetriebe-Ausgangswelle 13 verbunden. Eine Drehzahlreduktionsgetriebe-Ausgangswelle 26 ist mittels einer weiteren lösbaren Wellenverbindung 27 mit einer Verteilergetriebe-Eingangswelle 28 lösbar verbunden. Ferner ist das Drehzahlreduktionsgetriebe-Gehäuse 22 getrennt von einem Verteilergetriebe-Gehäuse 29 des Verteilergetriebes 7 ausgebildet. Das Drehzahlreduktionsgetriebe-Gehäuse 22 ist lösbar mit dem Verteilergetriebe-Gehäuse 29 verbunden. Hierzu dienen Befestigungsmittel 30, beispielsweise Schrauben, die einfach zugänglich sind.

Das Drehzahlreduktionsgetriebe 6 ist einstufig ausgebildet und weist ein Übersetzungsverhältnis i_{R} auf, das durch die eingangsseitige Drehzahl n_{R} und eine ausgangsseitige Drehzahl n_{V} definiert ist. Für das Übersetzungsverhältnis i_{R} gilt: i_{R} = n_{R}/n_{V} > 1. Das Übersetzungsverhältnis i_{R} ist definiert durch ein eingangsseitiges erstes Drehzahlreduktionsgetriebe-Zahnrad 31 und ein ausgangsseitiges zweites Drehzahlreduktionsgetriebe-Zahnrad 32. Die Zahnräder 31, 32 sind in Eingriff miteinander und insbesondere als Stirnräder ausgebildet.

Die Drehzahlreduktionsgetriebe-Eingangswelle 14 ist beidseitig des ersten Zahnrades 31 mittels Radiallagern 33, 34 an dem Gehäuse 22 gelagert. Die Drehzahlreduktionsgetriebe-Ausgangswelle 26 ist an einer dem Verteilergetriebe 7 abgewandten Seite mittels eines Axiallagers 35 an dem Gehäuse 22 gelagert. Ferner ist die Drehzahlreduktionsgetriebe-Ausgangswelle 26 beidseitig des zweiten Zahnrades 32 mittels Radiallagern 36, 37 an dem Gehäuse 22 gelagert. Die Radiallager 33, 34, 36 und/oder 37 sind insbesondere zur Aufnahme von Radialkräften ausgebildet, jedoch können diese auch zur Aufnahme von Axialkräften ausgebildet sein.

Das Verteilergetriebe 7 ist baulich getrennt von dem Drehzahlreduktionsgetriebe 6 und dem Doppelschneckenextruder 4 ausgebildet. Das Verteilergetriebe 7 bildet somit ein eigenständiges Getriebemodul bzw. eine eigenständige Getriebeeinheit. Die Verteilergetriebe-Eingangswelle 28 ist mittels der Wellenverbindung 27 lösbar mit der Ausgangswelle 26 des Drehzahlreduktionsgetriebes 6 verbunden. Das Verteilergetriebe 7 weist zudem zwei Verteilergetriebe-Ausgangswellen 38, 39 auf, die mittels jeweiliger lösbaren Wellenverbindungen 40, 41 mit Schneckenwellen 42, 43 des Doppelschneckenextruders 4 verbunden sind.

Das Verteilergetriebe 7 weist ein Übersetzungsverhältnis i_{V} auf, das durch die eingangsseitige Drehzahl n_{V} und die ausgangsseitige Drehzahl n_{B} definiert ist. Für das Übersetzungsverhältnis i_{V} gilt: i_{V} = n_{V}/n_{B} = 1. Die Verteilergetriebe-Eingangswelle 28 ist einteilig mit der Verteilergetriebe-Ausgangswelle 38 ausgebildet. Die Welle 28 bzw. 38 ist somit durchgehend ausgebildet. Zur Leistungsverteilung ist an der Eingangswelle 28 ein erstes Verteilergetriebe-Zahnrad 44 angeordnet, das in Eingriff mit einem zweiten Verteilergetriebe-Zahnrad 45 ist. Das zweite Zahnrad 45 ist an einer Verteilerwelle 46 angeordnet, an der abtriebsseitig ein drittes Verteilergetriebe-Zahnrad 47 angeordnet ist. Das dritte Zahnrad 47 ist in Eingriff mit einem vierten Verteilergetriebe-Zahnrad 48, das an der Verteilergetriebe-Ausgangswelle 39 angeordnet ist. Die Zahnräder 44, 45,47, 48 sind beispielsweise als Stirnräder ausgebildet.

Die Verteilergetriebe-Eingangswelle 28 ist beidseitig des ersten Zahnrades 44 durch zwei Radiallager 49, 50 an dem Verteilergetriebe-Gehäuse 29 gelagert. Zudem ist die Verteilergetriebe-Ausgangswelle 38 mittels eines weiteren Radiallagers 51 an dem Gehäuse 29 gelagert. Ferner ist die Verteilerwelle 46 mittels Radiallagern 52 bis 55 an dem Gehäuse 29 gelagert, wobei die Radiallager 52, 53 beidseitig des zweiten Zahnrades 45 und die Radiallager 54, 55 beidseitig des dritten Zahnrades 47 angeordnet sind. Die Verteilergetriebe-Ausgangswelle 39 ist an einer dem Doppelschneckenextruder 4 abgewandten Seite mittels eines Axiallagers 56 an dem Gehäuse 29 gelagert. Weiterhin ist die Verteilergetriebe-Ausgangswelle 39 beidseitig des vierten Zahnrads 48 mittels zwei Radiallagern 57, 58 an dem Gehäuse 29 gelagert. Die Radiallager 49, 50, 51, 52, 53, 54, 55, 57 und/oder 58 sind insbesondere zur Aufnahme von Radialkräften ausgebildet, jedoch können diese auch zur Aufnahme von Axialkräften ausgebildet sein.

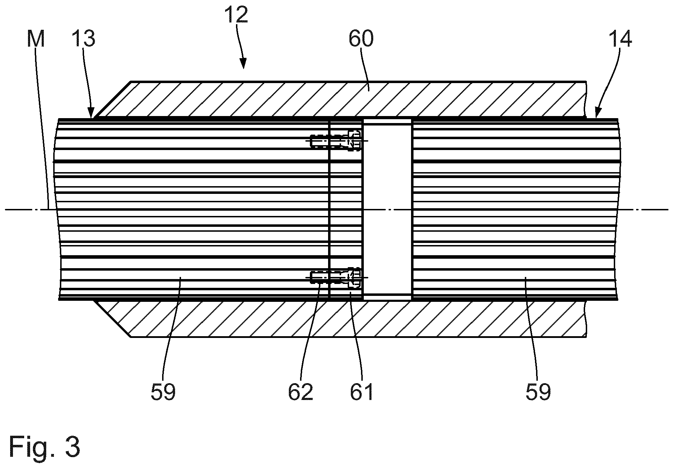

Die Wellenverbindung 12 ist derart ausgebildet, dass die Drehzahlwechselgetriebe-Ausgangswelle 13 und die Drehzahlreduktionsgetriebe-Eingangswelle 14 jeweils einen außenverzahnten Endbereich 59 aufweisen, die mittels einer innenverzahnten Hülse 60 drehfest miteinander verbunden sind. Die Hülse 60 ist mittels einer außenverzahnten Scheibe 61 in axialer Richtung relativ zu den Wellen 13, 14 fixiert. Hierzu ist die Scheibe 61 stirnseitig an einer der Wellen 13, 14 befestigt und relativ zu der Hülse 60 um eine Drehachse M der Wellen 13, 14 verdreht. Durch die Verdrehung um die Drehachse M wird die Hülse 60 zwischen der außenverzahnten Scheibe 61 und den außenverzahnten Endbereichen 59 verspannt, so dass die Hülse 60 in axialer Richtung fixiert ist. Die Scheibe 61 ist mit lösbaren Befestigungsmitteln 62, beispielsweise Schrauben, stirnseitig an einem der Endabschnitte 59 befestigt. In Fig. 3 ist die Scheibe 61 beispielhaft an der Drehzahlwechselgetriebe-Ausgangswelle 13 befestigt. Die lösbaren Wellenverbindungen 27 und 40, 41 sind entsprechend ausgebildet.

Die Getriebe-Anordnung 3 umfasst weiterhin eine Schmiereinrichtung 63 mit einer Schmiermittelpumpe 64 und einer Schmiermittelleitung 65. Die Schmiermittelleitung 65 ist ausgehend von einem nicht näher dargestellten Schmiermittelsumpf insbesondere umlaufend ausgebildet, so dass diese zu allen Schmierstellen der Getriebe-Anordnung 3 verläuft und endseitig wieder in den Schmiermittelsumpf mündet. Die Schmiermittelleitung 65 ist in Fig. 1 lediglich abschnittsweise dargstellt.

Zwischen dem Drehzahlwechselgetriebe 5 und dem Drehzahlreduktionsgetriebe 6 verläuft die Schmiermittelleitung 65 außerhalb der Gehäuse 19 und 22 und weist eine Soll-Trennstelle 66 auf. Entsprechend verläuft die Schmiermittelleitung 65 zwischen dem Drehzahlwechselgetriebe 5 und dem Verteilergetriebe 7 außerhalb der Gehäuse 19 und 29 und weist eine weitere Soll-Trennstelle 66 auf. Weiterhin verläuft die Schmiermittelleitung 65 zwischen dem Drehzahlreduktionsgetriebe 6 und dem Verteilergetriebe 7 außerhalb der Gehäuse 22 und 29 und weist eine Soll-Trennstelle 67 auf. Die Soll-Trennstellen 66, 67 sind insbesondere als Schnellkupplungen ausgeführt, die im getrennten Zustand selbsttätig abdichten und im verbundenen Zustand selbsttätig verriegeln. Der Schmiermittelsumpf ist beispielsweise im Drehzahlreduktionsgetriebe 6 ausgebildet. Zu ihrer Steuerung weist die Aufbereitungsanlage 1 eine Steuereinrichtung 68 auf. Die Steuereinrichtung 68 dient insbesondere zur Ansteuerung des Antriebsmotors 2. Zu diesem Zweck sind in der Steuereinrichtung 68 die Übersetzungsverhältnisse i_{R} und i_{V} gespeichert. Zum Einlesen des Übersetzungsverhältnisses i_{W} in die Steuereinrichtung 68 ist eine Leseeinrichtung 69 vorgesehen, die ein an dem Drehzahlwechselgetriebe 5 angeordnetes Kodierelement 70 auslesen kann. Das Kodierelement 70 enthält als kodierte Information das Übersetzungsverhältnis i_{W}. Das Kodierelement 70 ist beispielsweise optisch oder mechanisch mittels der Leseeinrichtung 69 auslesbar. Die Leseeinrichtung 69 ist in Signalverbindung mit der Steuereinrichtung 68, der das Übersetzungsverhältnis i_{W} bereitgestellt wird.

Zum Leerfahren des Doppelschneckenextruders 4 weist die Aufbereitungsanlage 1 eine Hilfsantriebsvorrichtung 71 auf, die über eine Freilaufkupplung 72 mit der Drehzahlreduktionsgetriebe-Eingangswelle 14 verbunden ist. Hierzu ist die Drehzahlreduktionsgetriebe-Eingangswelle 14 an einer dem Drehzahlwechselgetriebe 5 abgewandten Seite aus dem Drehzahlreduktionsgetriebe-Gehäuse 22 geführt. Zum Leerfahren des Doppelschneckenextruders 4 stellt die Hilfsantriebsvorrichtung 71 ein hohes Drehmoment bei einer niedrigen Drehzahl bereit. Wird die Getriebe-Anordnung 3 mittels des Antriebsmotors 2 angetrieben, so wird die Hilfsantriebsvorrichtung 71 mittels der Freilaufkupplung 72 von der Drehzahlreduktionsgetriebe-Eingangswelle 14 entkoppelt.

Nachfolgend sind die Inbetriebnahme und der Betrieb der Aufbereitungsanlage 1 beschrieben:
Im Betrieb der Aufbereitungsanlage 1 treibt der Antriebsmotor 2 über die Getriebe-Anordnung 3 die Schneckenwellen 42, 43 des Doppelschneckenextruders 4 gleichsinnig, also in gleichen Drehrichtungen an. Die Antriebsmotor-Drehzahl n_{A} wird mittels des Drehzahlwechselgetriebes 5 entsprechend dem Übersetzungsverhältnis i_{W} auf eine gewünschte Drehzahl n_{R} eingestellt. Da die Übersetzungsverhältnisse i_{R} und i_{V} nicht verändert werden, wird durch das Übersetzungsverhältnis i_{W} die Schneckenwellen-Drehzahl n_{S} bzw. die Getriebe-Drehzahl n_{B} der Getriebe-Anordnung 3 eingestellt. Zur Einstellung kann das Übersetzungsverhältnis i_{W} größer oder kleiner als 1 gewählt werden. Das Drehzahlreduktionsgetriebe 6 dient zur Reduktion der antriebsseitigen Drehzahl n_{R}, so dass für die abtriebsseitige Drehzahl n_{V} gilt: n_{V} < n_{R}. Das Verteilergetriebe 7 verteilt die Antriebsleistung an der Verteilergetriebe-Eingangswelle 28 auf die Verteilergetriebe-Ausgangswellen 38, 39. Da das Übersetzungsverhältnis i_{V} = 1 ist, ist die eingangsseitige Drehzahl n_{V} gleich der ausgangsseitigen Drehzahl n_{B}.

Um die Schneckenwellen-Drehzahl n_{S} im Verhältnis zu der Antriebsmotor-Drehzahl n_{A} zu verändern, wird das Übersetzungsverhältnis i_{G} der Getriebe-Anordnung 3 verändert. Dies erfolgt dadurch, dass das gesamte erste Drehzahlwechselgetriebe 5 mit dem Übersetzungsverhältnis i_{W} durch ein anderes zweites Drehzahlwechselgetriebe mit einem unterschiedlichen Übersetzungsverhältnis getauscht wird. Das bereitstehende zweite Geschwindigkeitswechselgetriebe ist in Fig. 1 lediglich angedeutet und mit dem Bezugszeichen 5' und dem Übersetzungsverhältnis i_{W}' dargestellt.

Für einen Austausch des Drehzahlwechselgetriebes 5 wird die Schmiermittelpumpe 64 außer Betrieb genommen, so dass das Schmiermittel in den Schmiermittelsumpf zurückläuft, der beispielsweise im Drehzahlreduktionsgetriebe 6 ausgebildet ist. Das Drehzahlwechselgetriebe 5 ist für die Demontage somit frei von Schmiermittel. Anschließend wird die Wellenverbindung zwischen dem Antriebsmotor 2 und dem Drehzahlwechselgetriebe 5 gelöst. Hierzu wird das Reibteil 9 demontiert und anschließend die Befestigungsmittel 25 gelöst, so dass die Gehäuse 19 und 22 nicht mehr miteinander verbunden sind.

Das Drehzahlwechselgetriebe 5 wird nun in axialer Richtung von dem Drehzahlreduktionsgetriebe 6 wegbewegt, so dass die Wellenverbindung 12 gelöst wird. Die Wellenverbindung 12 wird dadurch gelöst, dass die zugehörige Hülse 60 von der Drehzahlreduktionsgetriebe-Eingangswelle 14 abgezogen wird. Das Drehzahlwechselgetriebe 5 kann nun mittels einer nicht näher dargestellten Hebevorrichtung entfernt und durch das zweite Drehzahlwechselgetriebe 5' ersetzt werden.

Das Drehzahlwechselgetriebe 5' wird nun in umgekehrter Weise montiert. Hierzu wird das Drehzahlwechselgetriebe 5' zunächst in axialer Richtung auf das Drehzahlreduktionsgetriebe 6 zubewegt, so dass die an der Drehzahlwechselgetriebe-Ausgangswelle 13 angeordnete Hülse 60 über die Drehzahlreduktionsgetriebe-Eingangswelle 14 geschoben wird. Anschließend werden die Gehäuse 19, 22 mittels der Befestigungsmittel 25 miteinander verbunden. Hierbei wird der Verbindungsabschnitt 23 so an dem Gehäuse 22 montiert, dass die Drehzahlwechselgetriebe-Eingangswelle 11 koaxial zu der Antriebswelle 10 ausgerichtet ist. Anschließend wird durch Montage des Reibteils 9 eine Wellenverbindung zwischen der Antriebswelle 10 und der Drehzahlwechselgetriebe-Eingangswelle 11 ausgebildet. Die ausgebildeten Wellenverbindungen verbinden das Drehzahlwechselgetriebe 5' mit dem Antriebsmotor 2 und dem Drehzahlreduktionsgetriebe 6. Abschließend werden die Soll-Trennstellen 66 bzw. die Schnellkupplungen 66 verbunden. Die Leseeinrichtung 69 hat zwischenzeitlich das Kodierelement 70 ausgelesen und das Übersetzungsverhältnis i_{W}' bestimmt und an die Steuereinrichtung 68 übermittelt. Die Steuereinrichtung 68 steuert in Abhängigkeit des Übersetzungsverhältnisses i_{W}' den Antriebsmotor 2 an und stellt die Schneckenwellen-Drehzahl n_{S} ein.

In entsprechender Weise kann das Drehzahlwechselgetriebe 5 im Fall einer anstehenden Wartung oder eines Schadens ausgetauscht werden. Dadurch, dass das Drehzahlwechselgetriebe 5 als eigenständiges Getriebemodul bzw. als eigenständige Getriebeeinheit ausgebildet ist, weist die Aufbereitungsanlage 1 eine hohe Flexibilität und Produktivität bei dem Betrieb des Doppelschneckenextruders 4 auf. Durch den Austausch des gesamten Drehzahlwechselgetriebes 5 können geringe Stillstandszeiten und somit eine hohe Verfügbarkeit der Aufbereitungsanlage 1 erreicht werden.

Darüber hinaus kann im Falle einer anstehenden Wartung und/oder eines Schadens auch das Drehzahlreduktionsgetriebe 6 und/oder das Verteilergetriebe 7 aufgrund der Ausbildung als separates Getriebemodul als separate Getriebeeinheit getauscht werden, indem die jeweiligen Wellenverbindungen 12, 27, 40, 41 und die Soll-Trennstellen 66, 67 sowie die Gehäuse 19, 22, 29 voneinander getrennt werden. Hierdurch können Stillstandszeiten reduziert und die Verfügbarkeit der Aufbereitungsanlage 1 erhöht werden. Zudem können die einzelnen Getriebeeinheiten 5, 6, 7 einfacher transportiert werden.

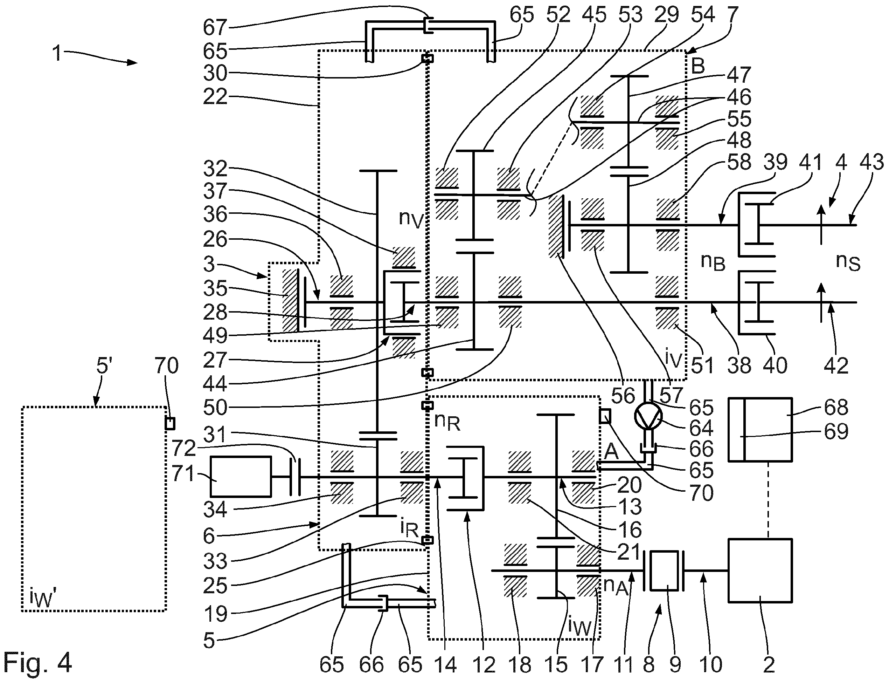

Nachfolgend ist anhand von Fig. 4 ein zweites Ausführungsbeispiel der Erfindung beschrieben. Im Unterschied zu dem ersten Ausführungsbeispiel sind das Drehzahlwechselgetriebe 5, das Drehzahlreduktionsgetriebe 6 und das Verteilergetriebe 7 U-förmig angeordnet. Der Antriebsmotor 2 und der Doppelschneckenextruder 4 sind somit an derselben Seite der Getriebe-Anordnung 3 angeordnet. Hierdurch wird der Austausch des Drehzahlreduktionsgetriebes 6 vereinfacht. Hinsichtlich des weiteren Aufbaus und der weiteren Funktionsweise der Aufbereitungsanlage 1 wird auf das erste Ausführungsbeispiel verwiesen.

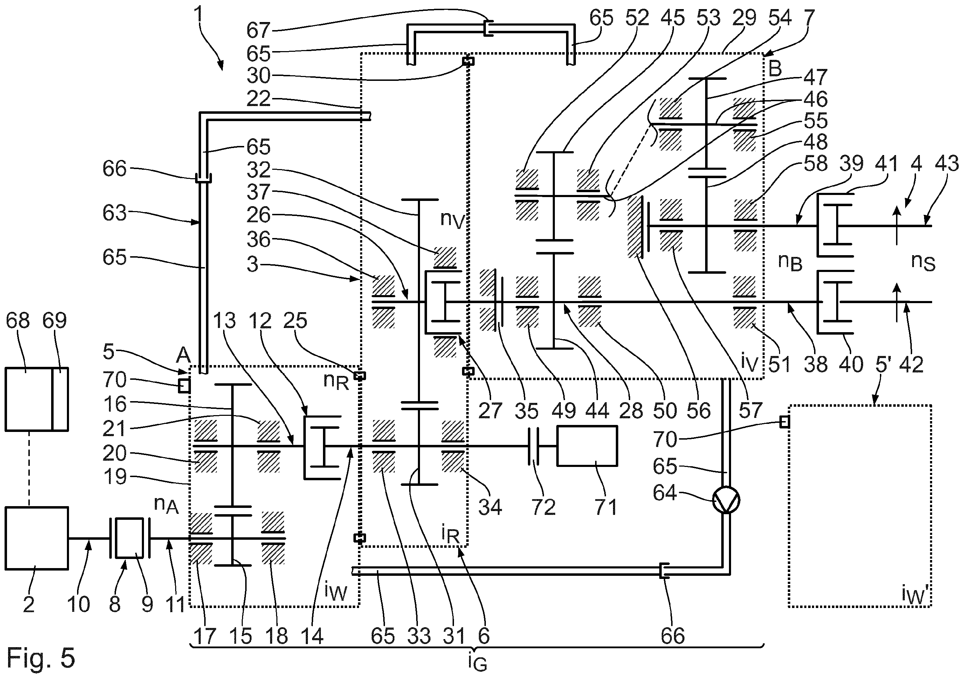

Nachfolgend ist anhand von Fig. 5 ein drittes Ausführungsbeispiel der Erfindung beschrieben. Im Unterschied zu den vorangegangenen Ausführungsbeispielen ist das Axiallager 35 in dem Verteilergetriebe 7 angeordnet. Hinsichtlich des weiteren Aufbaus und der weiteren Funktionsweise der Aufbereitungsanlage 1 wird auf die vorangegangenen Ausführungsbeispiele verwiesen.

Die Getriebe-Anordnung 3 weist keine Schaltstufen auf, wodurch die Getriebe-Anordnung 3 eine geringe Komplexität und damit geringe Kosten aufweist. Durch die geringe Komplexität weist die Getriebe-Anordnung 3 zudem eine hohe Zuverlässigkeit und damit eine hohe Verfügbarkeit auf.

Vorzugsweise werden alle Lager und Verzahnungen in der Getriebe-Anordnung 3 durch Druckleitungen mit Öl als Schmiermittel geschmiert. Die Schmiereinrichtung weist insbesondere einen zentralen Ein- und Ausspeisepunkt auf. Die Einspeisung ist gefolgt von einer internen Verteilung des Ölstroms auf die einzelnen Lager- und Verzahnungsstellen. An der Trennstelle zum Drehzahlwechselgetriebe 5 erfolgt die Übergabe aus einer Rohrleitung in einen Schlauch und von dort in ein fest verrohrtes bzw. gebohrtes internes Verteilersystem im Drehzahlwechselgetriebe 5. An der tiefsten Stelle der Getriebe-Anordnung 3 wird das Öl zentral über einen passiven Ablauf wieder in den Haupt-Ölsumpf in der Getriebe-Anordnung 3 zurückgeführt und von dort in eine Ölaufbereitungsanlage abgesaugt. Die Schläuche an den Verbindungsstellen werden mit Schnellkupplungen ausgeführt, die im Demontagefall leicht trennbar sind, im getrennten Zustand abdichten und im verbundenen Zustand verriegeln und gegen unbefugtes Öffnen gesichert sind.

## Patentansprüche

1. Getriebe-Anordnung für einen Doppelschneckenextruder umfassend
- ein Drehzahlwechselgetriebe (5) zur Einstellung einer Schneckenwellen-Drehzahl (n_{S}) von zwei Schneckenwellen (42, 43) eines Doppelschneckenextruders (4),
- ein Drehzahlreduktionsgetriebe (6),
- ein Verteilergetriebe (7) mit zwei Verteilergetriebe-Ausgangswellen (38, 39) zum Ankoppeln der Schneckenwellen (42, 43) des Doppelschneckenextruders (4),
wobei das Drehzahlwechselgetriebe (5) an einer Antriebsseite (A) angeordnet ist,
wobei das Drehzahlreduktionsgetriebe (6) das Drehzahlwechselgetriebe (5) mit dem Verteilergetriebe (7) koppelt, **dadurch gekennzeichnet, dass**
ein Drehzahlwechselgetriebe-Gehäuse (19) des Drehzahlwechselgetriebes (5) und ein Drehzahlreduktionsgetriebe-Gehäuse (22) des Drehzahlreduktionsgetriebes (6) getrennt ausgebildet sind,
wobei das Drehzahlreduktionsgetriebe (6) genau eine Drehzahlreduktionsgetriebe-Eingangswelle (14) aufweist und eine Drehzahlwechselgetriebe-Ausgangswelle (13) des Drehzahlwechselgetriebes (5) lösbar mit der Drehzahlreduktionsgetriebe-Eingangswelle (14) verbunden ist, sodass das Drehzahlwechselgetriebe (5) und das Drehzahlreduktionsgetriebe (6) voneinander trennbar ausgebildet sind.

2. Getriebe-Anordnung nach Anspruch 1, **dadurch gekennzeichnet, dass** das Drehzahlwechselgetriebe (5) an der Antriebsseite (A) eine Drehzahlwechselgetriebe-Eingangswelle (11) zum lösbaren Ankoppeln des Antriebsmotors (2) aufweist.

3. Getriebe-Anordnung nach Anspruch 1 oder 2, **dadurch gekennzeichnet,**
**dass** die Drehzahlwechselgetriebe-Ausgangswelle (13) ein daran angeordnetes ausgangsseitiges Zahnrad (16) aufweist und
**dass** die Drehzahlwechselgetriebe-Ausgangswelle (13) beidseitig des Zahnrads (16) durch Radiallager (20, 21) gelagert ist, insbesondere an dem Drehzahlwechselgetriebe-Gehäuse (19).

4. Getriebe-Anordnung nach einem der Ansprüche 1 bis 3, **dadurch gekennzeichnet,**
**dass** die Drehzahlreduktionsgetriebe-Eingangswelle (14) ein daran angeordnetes eingangsseitiges Zahnrad (31) aufweist und
**dass** die Drehzahlreduktionsgetriebe-Eingangswelle (14) beidseitig des Zahnrads (31) durch Radiallager (33, 34) gelagert ist, insbesondere an dem Drehzahlreduktionsgetriebe-Gehäuse (22).

5. Getriebe-Anordnung nach einem der Ansprüche 1 bis 4, **dadurch gekennzeichnet,**
**dass** eine Drehzahlwechselgetriebe-Eingangswelle (11) sowie die Drehzahlwechselgetriebe-Ausgangswelle (13) an dem Drehzahlwechselgetriebe-Gehäuse (19) gelagert sind,
**dass** das Drehzahlwechselgetriebe-Gehäuse (19) einen Verbindungsabschnitt (23) zur Verbindung mit dem Drehzahlreduktionsgetriebe-Gehäuse (22) aufweist, der derart ausgebildet ist, dass die Drehzahlwechselgetriebe-Eingangswelle (11) in mehreren Winkelpositionen (α) relativ zu der Drehzahlwechselgetriebe-Ausgangswelle (13) positionierbar ist.

6. Getriebe-Anordnung nach einem der Ansprüche 1 bis 5, **dadurch gekennzeichnet,**
**dass** zwischen dem Drehzahlwechselgetriebe (5) und dem Drehzahlreduktionsgetriebe (6) mindestens eine Schmiermittelleitung (65) mit einer Soll-Trennstelle (66) verläuft, die insbesondere außerhalb des Drehzahlwechselgetriebe-Gehäuses (19) und des Drehzahlreduktionsgetriebe-Gehäuses (22) angeordnet ist.

7. Getriebe-Anordnung nach einem der Ansprüche 1 bis 6, **dadurch gekennzeichnet,**
**dass** das Drehzahlwechselgetriebe (5) ein Kodierelement (70) zum Auslesen eines Übersetzungsverhältnisses (iw) aufweist.

8. Getriebe-Anordnung nach einem der Ansprüche 1 bis 7, **dadurch gekennzeichnet,**
**dass** das Drehzahlreduktionsgetriebe (6) eine Drehzahlreduktionsgetriebe-Ausgangswelle (26) aufweist, die lösbar mit einer Verteilergetriebe-Eingangswelle (28) des Verteilergetriebes (7) verbunden ist.

9. Getriebe-Anordnung nach einem der Ansprüche 1 bis 8, **dadurch gekennzeichnet,**
**dass** das Drehzahlreduktionsgetriebe (6) eine Drehzahlreduktionsgetriebe-Ausgangswelle (26) und ein daran angeordnetes ausgangsseitiges Zahnrad (32) aufweist und
**dass** die Drehzahlreduktionsgetriebe-Ausgangswelle (26) beidseitig des Zahnrads (32) durch Radiallager (36, 37) gelagert ist, insbesondere an dem Drehzahlreduktionsgetriebe-Gehäuse (22).

10. Getriebe-Anordnung nach einem der Ansprüche 1 bis 9, **dadurch gekennzeichnet,**
**dass** das Verteilergetriebe (7) eine Verteilergetriebe-Eingangswelle (28) und ein daran angeordnetes eingangsseitiges Zahnrad (44) aufweist und
**dass** die Verteilergetriebe-Eingangswelle (28) beidseitig des Zahnrads (44) durch Radiallager (49, 50) gelagert ist, insbesondere an einem Verteilergetriebe-Gehäuse (29).

11. Getriebe-Anordnung nach einem der Ansprüche 1 bis 10, **dadurch gekennzeichnet,**
**dass** das Drehzahlreduktionsgetriebe-Gehäuse (22) des Drehzahlreduktionsgetriebes (6) und ein Verteilergetriebe-Gehäuse (29) des Verteilergetriebes (7) getrennt ausgebildet sind.

12. Aufbereitungsanlage zur Materialaufbereitung, mit
- einer Getriebe-Anordnung (3) nach einem der Ansprüche 1 bis 11,
- einem Antriebsmotor (2), der mit dem Drehzahlwechselgetriebe (5) gekoppelt ist, und
- einem Doppelschneckenextruder (4), dessen Schneckenwellen (42, 43) mit dem Verteilergetriebe (7) gekoppelt sind.

13. Verfahren zur Inbetriebnahme einer Aufbereitungsanlage zur Materialaufbereitung, umfassend die Schritte:
- Bereitstellen einer Aufbereitungsanlage (1) zur Materialaufbereitung mit
-- einer Getriebe-Anordnung (3) mit
--- einem ersten Drehzahlwechselgetriebe (5) zur Einstellung einer Schneckenwellen-Drehzahl (n_{S}) von zwei Schneckenwellen (42, 43) eines Doppelschneckenextruders (4),
--- einem Verteilergetriebe (7) mit zwei Verteilergetriebe-Ausgangswellen (38, 39) zum Ankoppeln der Schneckenwellen (42, 43) des Doppelschneckenextruders (4),
--- einem Drehzahlreduktionsgetriebe (6), das das erste Drehzahlwechselgetriebe (5) mit dem Verteilergetriebe (7) koppelt, wobei ein Drehzahlwechselgetriebe-Gehäuse (19) des Drehzahlwechselgetriebes (5) und ein Drehzahlreduktionsgetriebe-Gehäuse (22) des Drehzahlreduktionsgetriebes (6) getrennt ausgebildet sind, wobei das Drehzahlreduktionsgetriebe (6) genau eine Drehzahlreduktionsgetriebe-Eingangswelle (14) aufweist und eine Drehzahlwechselgetriebe-Ausgangswelle (13) des Drehzahlwechselgetriebes (5) lösbar mit der Drehzahlreduktionsgetriebe-Eingangswelle (14) verbunden ist, sodass das Drehzahlreduktionsgetriebe (6) von dem ersten Drehzahlwechselgetriebe (5) trennbar ist,
--- einem Antriebsmotor (2), der mit dem ersten Drehzahlwechselgetriebe (5) gekoppelt ist, und
--- einem Doppelschneckenextruder (4), dessen Schneckenwellen (42, 43) mit dem Verteilergetriebe (7) gekoppelt sind,
- Trennen des ersten Drehzahlwechselgetriebes (5) von dem Antriebsmotor (2) und dem Drehzahlreduktionsgetriebe (5),
- Ersetzen des ersten Drehzahlwechselgetriebes (5) durch ein zweites Drehzahlwechselgetriebe (5'),
- Koppeln des zweiten Drehzahlwechselgetriebes (5') an den Antriebsmotor (2) und das Drehzahlreduktionsgetriebe (6), und
- Anfahren des Doppelschneckenextruders (4) mittels des Antriebsmotors (2).

## Claims

1. Gearbox assembly for a twin-screw extruder comprising
- a speed change gearbox (5) for adjusting a screw shaft rotational speed (ns) of two screw shafts (42, 43) of a twin-screw extruder (4),
- a speed reduction gearbox (6),
- a distribution gearbox (7) with two distribution gearbox output shafts (38, 39) allowing the screw shafts (42, 43) of the twin-screw extruder (4) to be coupled thereto,
wherein the speed change gearbox (5) is arranged at a driving end (A),
wherein the speed reduction gearbox (6) couples the speed change gearbox (5) to the distribution gearbox (7),
**characterized in that**
a speed change gearbox housing (19) of the speed change gearbox (5) and a speed reduction gearbox housing (22) of the speed reduction gearbox (6) are configured such as to be separate from each other, wherein the speed reduction gearbox (6) has precisely one speed reduction gearbox input shaft (14) and a speed change gearbox output shaft (13) of the speed change gearbox (5) is detachably connected with the speed reduction gearbox input shaft (14), with the result that the speed change gearbox (5) and the speed reduction gearbox (6) are configured such as to be separable from each other.

2. Gearbox assembly according to claim 1, **characterized in that** the speed change gearbox (5) has a speed change gearbox input shaft (11) at the driving end (A) allowing the drive motor (2) to be detachably coupled thereto.

3. Gearbox assembly according to claim 1 or 2, **characterized in**
**that** the speed change gearbox output shaft (13) has a gear (16) disposed at the output end thereof and
**that** the speed change gearbox output shaft (13) is mounted, by means of radial bearings (20, 21), on both sides of the gear (16), in particular to the speed change gearbox housing (19).

4. Gearbox assembly according to any one of claims 1 to 3, **characterized in**
**that** the speed reduction gearbox input shaft (14) has a gear (31) disposed at the input end thereof and
**that** the speed reduction gearbox input shaft (14) is mounted, by means of radial bearings (33, 34), on both sides of the gear (31), in particular to the speed reduction gearbox housing (22).

5. Gearbox assembly according to any one of claims 1 to 4, **characterized in**
**that** a speed change gearbox input shaft (11) as well as the speed change gearbox output shaft (13) are mounted to the speed change gearbox housing (19),
**that** the speed change gearbox housing (19) has a connection portion (23) for the connection to the speed reduction gearbox housing (22), the connection portion being configured such that the speed change gearbox input shaft (11) is positionable in a plurality of angular positions (α) relative to the speed change gearbox output shaft (13).

6. Gearbox assembly according to any one of claims 1 to 5, **characterized in**
**that** at least one lubricant line (65) having a predetermined separation point (66) runs between the speed change gearbox (5) and the speed reduction gearbox (6), the predetermined separation point being in particular arranged outside the speed change gearbox housing (19) and the speed reduction gearbox housing (22).

7. Gearbox assembly according to any one of claims 1 to 6, **characterized in**
**that** the speed change gearbox (5) has a coding element (70) for reading out a gear ratio (iw).

8. Gearbox assembly according to any one of claims 1 to 7, **characterized in**
**that** the speed reduction gearbox (6) has a speed reduction gearbox output shaft (26), which is detachably connected to a distribution gearbox input shaft (28) of the distribution gearbox (7).

9. Gearbox assembly according to any one of claims 1 to 8, **characterized in**
**that** the speed reduction gearbox (6) has a speed reduction gearbox output shaft (26) and a gear (32) disposed at the output end thereof and
**that** the speed reduction gearbox output shaft (26) is mounted, by means of radial bearings (36, 37), on both sides of the gear (32), in particular to the speed reduction gearbox housing (22).

10. Gearbox assembly according to any one of claims 1 to 9, **characterized in**
**that** the distribution gearbox (7) has a distribution gearbox input shaft (28) and a gear (44) disposed at the input end thereof and
**that** the distribution gearbox input shaft (28) is mounted, by means of radial bearings (49, 50), on both sides of the gear (44), in particular to a distribution gearbox housing (29).

11. Gearbox assembly according to any one of claims 1 to 10, **characterized in**
**that** the speed reduction gearbox housing (22) of the speed reduction gearbox (6) and a distribution gearbox housing (29) of the distribution gearbox (7) are configured such as to be separate from each other.

12. Treatment installation for material treatment, comprising
- a gearbox assembly (3) according to any one of claims 1 to 11,
- a drive motor (2) coupled to the speed change gearbox (5), and
- a twin-screw extruder (4), the screw shafts (42, 43) of which are coupled to the distribution gearbox (7).

13. Method for the startup of a treatment installation for material treatment, the method comprising the following steps:
- providing a treatment installation (1) for material treatment, the treatment installation (1) comprising
-- a gearbox assembly (3) comprising
--- a first speed change gearbox (5) for adjusting a screw shaft rotational speed (ns) of two screw shafts (42, 43) of a twin-screw extruder (4),
--- a distribution gearbox (7) with two distribution gearbox output shafts (38, 39) allowing the screw shafts (42, 43) of the twin-screw extruder (4) to be coupled thereto,
--- a speed reduction gearbox (6) that couples the first speed change gearbox (5) to the distribution gearbox (7), wherein a speed change gearbox housing (19) of the speed change gearbox (5) and a speed reduction gearbox housing (22) of the speed reduction gearbox (6) are configured such as to be separate from each other, wherein the speed reduction gearbox (6) has precisely one speed reduction gearbox input shaft (14) and a speed change gearbox output shaft (13) of the speed change gearbox (5) is detachably connected to the speed reduction gearbox input shaft (14) such that the speed reduction gearbox (6) is separable from the first speed change gearbox (5),
-- a drive motor (2) coupled to the first speed change gearbox (5), and
--- a twin-screw extruder (4) the screw shafts (42, 43) of which are coupled to the distribution gearbox (7),
- separating the first speed change gearbox (5) from the drive motor (2) and the speed reduction gearbox (5),
- replacing the first speed change gearbox (5) by a second speed change gearbox (5'),
- coupling the second speed change gearbox (5') to the drive motor (2) and the speed reduction gearbox (6), and
- starting up the twin-screw extruder (4) by means of the drive motor (2).

## Revendications

1. Système d'engrenage pour une extrudeuse à deux vis, comprenant
- une boîte de changement de vitesse de rotation (5) pour ajuster une vitesse de rotation d'un arbre de vis sans fin (ns) de deux arbres de vis sans fin (42, 43) d'une extrudeuse à deux vis (4),
- une boîte de réduction de vitesse de rotation (6),
- une boîte de transfert (7) comprenant deux arbres de sortie de boîte de transfert (38, 39) pour accoupler les arbres sans fin (42, 43) de l'extrudeuse à deux vis (4),
la boîte de changement de vitesse de rotation (5) étant disposée sur un côté d'entraînement (A),
la boîte de réduction de vitesse de rotation (6) accouplant la boîte de changement de vitesse de rotation (5) à la boîte de transfert (7), **caractérisé en ce qu'**
un carter de boîte de changement de vitesse de rotation (19) de la boîte de changement de vitesse de rotation (5) et un carter de boîte de réduction de vitesse de rotation (22) de la boîte de réduction de vitesse de rotation (6) sont configurés séparément,
la boîte de réduction de vitesse de rotation (6) présentant exactement un arbre d'entrée de boîte de réduction de vitesse de rotation (14) et un arbre de sortie de boîte de changement de vitesse de rotation (13) de la boîte de changement de vitesse de rotation (5) étant lié de manière amovible à l'arbre d'entrée de boîte de réduction de vitesse de rotation (14), de sorte que la boîte de changement de vitesse de rotation (5) et la boîte de réduction de vitesse de rotation (6) sont configurées de manière séparable l'une de l'autre.

2. Système d'engrenage selon la revendication 1, **caractérisé en ce que** la boîte de changement de vitesse de rotation (5) présente un arbre d'entrée de boîte de changement de vitesse de rotation (11) sur le côté d'entraînement (A), afin d'accoupler le moteur d'entraînement (2) de manière amovible.

3. Système d'engrenage selon la revendication 1 ou 2, **caractérisé en ce**
**que** l'arbre de sortie de boîte de changement de vitesse de rotation (13) présente une roue d'engrenage (16) disposé sur le côté sortie de celui-ci, et
**que** l'arbre de sortie de boîte de changement de vitesse de rotation (13) est monté sur les deux côtés de la roue d'engrenage (16) par le biais de paliers radiaux (20, 21), en particulier sur le carter de boîte de changement de vitesse de rotation (19).

4. Système d'engrenage selon l'une quelconque des revendications 1 à 3, **caractérisé en ce**
**que** l'arbre d'entrée de boîte de réduction de vitesse de rotation (14) présente une roue d'engrenage (31) disposée sur le côté entrée de celui-ci, et
**que** l'arbre d'entrée de boîte de réduction de vitesse de rotation (14) est monté sur les deux côtés de la roue d'engrenage (31) par le biais de paliers radiaux (33, 34), en particulier sur le carter de boîte de réduction de vitesse de rotation (22).

5. Système d'engrenage selon l'une quelconque des revendications 1 à 4, **caractérisé en ce**
**qu'**un arbre d'entrée de boîte de changement de vitesse de rotation (11) ainsi que l'arbre de sortie de boîte de changement de vitesse de rotation (13) sont montés sur le carter de boîte de changement de vitesse de rotation (19),
**que** le carter de boîte de changement de vitesse de rotation (19) présente une partie de liaison (23) pour une liaison avec le carter de boîte de réduction de vitesse de rotation (22), qui est configuré de sorte que l'arbre d'entrée de boîte de changement de vitesse de rotation (11) peut être positionné en plusieurs positions angulaires (α) par rapport à l'arbre de sortie de boîte de changement de vitesse de rotation (13).

6. Système d'engrenage selon l'une quelconque des revendications 1 à 5, **caractérisé en ce**
**qu'**entre la boîte de changement de vitesse de rotation (5) et la boîte de réduction de vitesse de rotation (6), au moins un tuyau de lubrifiant (65) comprenant un point de séparation de consigne (66) s'étend, qui est disposé en particulier à l'extérieur du carter de boîte de changement de vitesse de rotation (19) et du carter de boîte de réduction de vitesse de rotation (22).

7. Système d'engrenage selon l'une quelconque des revendications 1 à 6, **caractérisé en ce**
**que** la boîte de changement de vitesse de rotation (5) présente un élément de codage (70) pour la lecture d'un rapport de transmission (iW).

8. Système d'engrenage selon l'une quelconque des revendications 1 à 7, **caractérisé en ce**
**que** la boîte de réduction de vitesse de rotation (6) présente un arbre de sortie de boîte de réduction de vitesse de rotation (26), celui-ci étant lié de manière amovible à un arbre d'entrée de boîte de transfert (28) de la boîte de transfert (7).

9. Système d'engrenage selon l'une quelconque des revendications 1 à 8, **caractérisé en ce**
**que** la boîte de réduction de vitesse de rotation (6) présente un arbre de sortie de boîte de réduction de vitesse de rotation (26) et une roue d'engrenage (32) disposé sur le côté sortie de celui-ci, et **que** l'arbre de sortie de boîte de réduction de vitesse de rotation (26) est monté sur les deux côtés de la roue d'engrenage (32) par le biais de paliers radiaux (36, 37), en particulier sur le carter de boîte de réduction de vitesse de rotation (22).

10. Système d'engrenage selon l'une quelconque des revendications 1 à 9, **caractérisé en ce**
**que** la boîte de transfert (7) présente un arbre d'entrée de boîte de transfert (28) et une roue d'engrenage (44) disposé sur le côté entrée de celui-ci, et
**que** l'arbre d'entrée de boîte de transfert (28) est monté sur les deux côtés de la roue d'engrenage (44) par le biais de paliers radiaux (49, 50), en particulier sur le carter de boîte de transfert (29).

11. Système d'engrenage selon l'une quelconque des revendications 1 à 10, **caractérisé en ce**
**que** le carter de boîte de réduction de vitesse de rotation (22) de la boîte de réduction de vitesse de rotation (6) et un carter de boîte de transfert (29) de la boîte de transfert (7) sont configurés séparément.

12. Installation de préparation pour le traitement de matériaux, comprenant
- un système d'engrenage (3) selon l'une quelconque des revendications 1 à 11,
- un moteur d'entraînement (2) étant accouplé à la boîte de changement de vitesse de rotation (5), et
- une extrudeuse à deux vis (4), les arbres sans fin (42, 43) de laquelle sont accouplés à la boîte de transfert (7).

13. Procédé de mise en service d'une installation de préparation pour le traitement de matériaux, comprenant les étapes :
- mise à disposition d'une installation de préparation (1) pour le traitement de matériaux comprenant
-- un système d'engrenage (3) comprenant
--- une première boîte de changement de vitesse de rotation (5) pour ajuster une vitesse de rotation d'un arbre de vis sans fin (nS) de deux arbres de vis sans fin (42, 43) d'une extrudeuse à deux vis (4),
--- une boîte de transfert (7) comprenant deux arbres de sortie de boîte de transfert (38, 39) pour accoupler les arbres sans fin (42, 43) de l'extrudeuse à deux vis (4),
--- une boîte de réduction de vitesse de rotation (6) accouplant la boîte de changement de vitesse de rotation (5) à la boîte de transfert (7), un carter de boîte de changement de vitesse de rotation (19) de la boîte de changement de vitesse de rotation (5) et un carter de boîte de réduction de vitesse de rotation (22) de la boîte de réduction de vitesse de rotation (6) étant configurés séparément, la boîte de réduction de vitesse de rotation (6) présentant exactement un arbre d'entrée de boîte de réduction de vitesse de rotation (14) et un arbre de sortie de boîte de changement de vitesse de rotation (13) de la boîte de changement de vitesse de rotation (5) étant lié de manière amovible à l'arbre d'entrée de boîte de réduction de vitesse de rotation (14), de sorte que la boîte de réduction de vitesse de rotation (6) est séparable de la boîte de changement de vitesse de rotation (5),
-- un moteur d'entraînement (2) étant accouplé à la première boîte de changement de vitesse de rotation (5), et
-- une l'extrudeuse à deux vis (4), les arbres sans fin (42, 43) de laquelle sont accouplés à la boîte de transfert (7),
- séparation de la première boîte de changement de vitesse de rotation (5) du moteur d'entraînement (2) et de la boîte de réduction de vitesse de rotation (5),
- remplacement de la première boîte de changement de vitesse de rotation (5) par une deuxième boîte de changement de vitesse de rotation (5'),
- accouplage de la deuxième boîte de changement de vitesse de rotation (5') au moteur d'entraînement (2) et la boîte de réduction de vitesse de rotation (6), et
- démarrage de l'extrudeuse à deux vis (4) par le biais du moteur d'entraînement (2).
